# EUROPEAN PATENT SPECIFICATION

(11) **EP 3 539 857 B1**
(45) Date of publication and mention of the grant of the patent: **29.04.2020**
(21) Application number: 19159853.1
(22) Date of filing: 28.02.2019
(51) Int. Cl.: B62L 3/08, B62L 3/04, B62H 1/04

(54) **STRADDLED VEHICLE**
GRÄTSCHSITZFAHRZEUG
VÉHICULE À ENFOURCHER

(30) Priority: 12.03.2018 JP 2018044414
(43) Date of publication of application: 18.09.2019
(73) Proprietor: YAMAHA HATSUDOKI KABUSHIKI KAISHA, Iwata-shi, Shizuoka 438-8501 (JP)
(72) Inventor: YAGI, Kyohei, Iwata-shi, Shizuoka 438-8501 (JP)
(74) Representative: Grünecker Patent- und Rechtsanwälte PartG mbB

(56) References cited:
- WO-A1-2011/099130
- JP-A- 2008 080 984
- JP-A- 2011 143 767
- JP-A- 2013 252 786

## Description

The present invention relates to a straddled vehicle, and in particular to a straddled vehicle provided with an interlocking brake device.

In recent years, there has been known a saddled vehicle in which the operation force of a brake pedal is distributed and transmitted to a front brake and a rear brake thereby interlocking the front and rear brakes. For example, in Japanese Unexamined Patent Publication No. 2013-252786, the operation force of the brake pedal is distributed to a front brake and a rear brake by an interlocking brake device. The brake pedal and the interlocking brake device are disposed outward of a pivot frame in the vehicle width direction.

Generally, some straddled vehicles have a center stand attached to the pivot frame. An urging member for applying an urging force for holding the center stand in a stored position or an upright position is attached to the center stand. One end of the urging member is attached to the center stand, and the other end thereof is attached to the pivot frame. Further, taking into account the assemblability of the center stand, a typical design concept for those skilled in the art is to dispose the urging member outward in the vehicle width direction of the pair of leg portions of the center stand.

However, in that case, in the straddled vehicle provided with the interlocking brake device described above, there is a possibility that the urging member interferes with the interlocking brake device. For example, if the attachment position of the urging member to the pivot frame is arranged above the interlocking brake device, the urging member interferes with the interlocking brake device when the center stand moves between the stored position and the upright position. Likewise, when the attachment position of the urging member to the pivot frame is arranged in front of the interlocking brake device, the urging member interferes with the interlocking brake device.

When the attachment position of the urging member on the pivot frame is arranged below the interlocking brake device in order to avoid the interference of the urging member with the interlocking brake device, a clearance between the center stand and the ground is narrowed. In addition, the bank angle of the vehicle will be affected if the urging member is disposed more outward than the interlocking brake device in the vehicle width direction in order to avoid the interference of the urging member with interlocking brake device.

Furthermore, if the shape and layout of the center stand are changed so as to dispose the urging member at a position where it will not interfere with the interlocking brake device, there is concern that the center stand will become large. Further, in that case, although interference with the interlocking brake device can be avoided, there is a possibility that problems of interference between other vehicle body components and the center stand may occur. The document JP 2011 143767 A discloses a saddled vehicle according to the preamble of claim 1.

The present invention has been made to accomplish an objective of providing a straddled vehicle equipped with an interlocking brake device capable of preventing interference between an urging member and an interlocking brake device while suppressing deterioration of the assemblability of the urging member to the center stand as well as limiting upsizing of the vehicle. According to the present invention said object is solved by a straddled vehicle having the features of independent claim 1. Preferred embodiments are laid down in the dependent claims.

A straddled vehicle according to one embodiment includes a vehicle body frame, a front wheel, a rear wheel, a front brake unit, a rear brake unit, a brake pedal, an equalizer, and a center stand device. The front wheel is rotatably supported by the vehicle body frame. The rear wheel is rotatably supported by the vehicle body frame. The front brake unit applies a braking force to the front wheel. The rear brake unit applies a braking force to the rear wheel. The brake pedal is rotatably supported by the vehicle body frame. The equalizer is connected to the brake pedal and distributes the operation force of the brake pedal to the front brake unit and the rear brake unit. The center stand device is supported by the vehicle body frame so as to be movable between an upright position and a stored position.

The vehicle body frame includes a pivot frame and a supporting member. The pivot frame rotatably supports the center stand device. The supporting member is connected to the pivot frame. The center stand device includes a stand main body, an urging member, and a link mechanism. The stand main body includes a first leg portion and a second leg portion which are disposed at intervals in the vehicle width direction and is rotatably supported by the pivot frame. The urging member is attached to the first leg portion and urges the stand main body. The link mechanism is rotatably supported by the supporting member. The urging member is attached to the link mechanism.

The equalizer is located more outward than the pivot frame in the vehicle width direction. At least a portion of the link mechanism overlaps the equalizer as seen in a side view of the vehicle. A support position of the link mechanism by the supporting member is located more inward than the pivot frame in the vehicle width direction. An attachment position of the urging member in the link mechanism is located more outward than the first leg portion in the vehicle width direction.

In the straddled vehicle according to the present exemplary embodiment, the urging member is supported by the pivot frame via the link mechanism. The equalizer is located more outward than the pivot frame in the vehicle width direction whereas the support position of the link mechanism by the supporting member is located more inward than the pivot frame in the vehicle width direction. With this configuration, it is possible to easily avoid interference between the urging member and the equalizer while limiting upsizing of the vehicle. Further, the attachment position of the urging member in the link mechanism is located more outward than the first leg portion in the vehicle width direction. Therefore, the deterioration of the assemblability of the urging member to the center stand device can be suppressed.

The attachment position of the urging member in the link mechanism may be located more outward than the pivot frame in the vehicle width direction. In this case, the assemblability of the urging member can be further improved.

The support position of the link mechanism by the supporting member may be located more forward than the support position of the stand main body by the pivot frame. Even with such a disposition, interference between the urging member and the equalizer can be easily avoided while limiting upsizing of the vehicle. In addition, the deterioration of the assemblability of the urging member to the center stand device can be suppressed.

The urging member may urge the center stand device toward the upright position in a state in which the center stand device is located more to the upright position side with respect to the neutral position between the upright position and the stored position. The urging member may urge the center stand device toward the stored position in a state in which the center stand device is located more to the stored position side with respect to the neutral position. In this case, the center stand device can be stably held in the upright position and the stored position.

The stand main body may further include a shaft portion extending in the vehicle width direction and supported by the pivot frame. The link mechanism may include a recess portion depressed to avoid the shaft portion. In this case, interference between the link mechanism and the shaft portion can be avoided.

The link mechanism may include a first portion and a second portion. The first portion may extend rearward from a position more inward than the pivot frame in the vehicle width direction and more forward than the equalizer in a state where the center stand device is positioned at the stored position. The second portion may extend from a position more inward than the pivot frame in the vehicle width direction and passing behind the equalizer to a position more outward than the pivot frame in the vehicle width direction in a state where the center stand device is positioned at the stored position. In this case, the urging member can be supported by the link mechanism while avoiding interference with the equalizer.

The link mechanism may include a first portion and a second portion. The first portion may extend downward from a position more inward than the pivot frame in the vehicle width direction in a state where the center stand device is positioned at the upright position. The second portion may extend from a position more inward than the pivot frame in the vehicle width direction and passing under the pivot frame to a position more outward than the pivot frame in the vehicle width direction in a state where the center stand device is positioned at the upright position. In this case, the urging member can be supported by the link mechanism while avoiding interference with the pivot frame.

At least a portion of the link mechanism may overlap with the equalizer as seen in a side view of the vehicle in a state where the center stand device is positioned at the stored position. In this case, the link mechanism and the equalizer can be compactly disposed.

In a state in which the center stand device is positioned at the stored position, the link mechanism does not have to overlap with the equalizer as seen in a plan view of the vehicle. In this case, interference between the link mechanism and the equalizer can be avoided.

The support position of the link mechanism by the support member may be located more forward than the equalizer. At least a portion of the link mechanism may be located more rearward than the equalizer in a state where the center stand device is positioned at the stored position. In this case, even if the link mechanism is disposed over a position that is more forward and more rearward than the equalizer, the link mechanism is disposed inward in the vehicle width direction of the pivot frame, thereby capable of avoiding interference with the equalizer.

At least a portion of the urging member may overlap the rear wheel as seen in a side view of the vehicle in a state where the center stand device is positioned at the stored position. Thus, a disposition space of the center stand device is particularly narrow in a small saddled vehicle having a small wheel base. However, in the saddled vehicle according to the present exemplary embodiment, interference between the urging member and the equalizer can be easily avoided even in such a small vehicle.

The rear brake unit may include a drum brake and a tension bar. The tension bar may be connected to the drum brake and extend forward from the drum brake. In a state where the center stand device is positioned at the stored position, at least a portion of the link mechanism may be located below the tension bar and may overlap the tension bar as seen in a plan view of the vehicle. In this case, interference between the tension bar and the link mechanism can be avoided while disposing the tension bar and the link mechanism compactly as well.

At least a portion of the link mechanism may be located lower than the equalizer in a state where the center stand device is positioned at the upright position. Even with such a disposition, interference between the link mechanism and the equalizer can be easily avoided in the straddled vehicle according to the present exemplary embodiment.

At least a portion of the link mechanism may be located forward than a rear end of the equalizer in a state in which the center stand device is positioned at the upright position. Even with such a disposition, interference between the link mechanism and the equalizer can be easily avoided in the straddled vehicle according to the present exemplary embodiment.

The rear brake unit includes a rear brake main body and a rear brake transmission member. The rear brake main body is attached to the rear wheel. The rear brake transmission member is connected to the rear brake main body and extends forward from the rear brake main body. The equalizer is connected to the rear brake transmission member and the brake pedal. In this case, the equalizer can distribute the operation force of the brake pedal to the rear brake main body via the rear brake transmission member.

### BRIEF DESCRIPTION OF THE DRAWINGS

- FIG. 1: is a side view of a straddled vehicle according to an exemplary embodiment.
- FIG. 2: is a front view of the straddled vehicle.
- FIG. 3: is a schematic diagram showing a configuration of a braking system of the saddled vehicle.
- FIG. 4: is a side view showing a center stand device in a stored state.
- FIG. 5: is a side view showing the center stand device in an upright state.
- FIG. 6: is a perspective view of a pivot frame and a center stand.
- FIG. 7: is a perspective view of a pivot frame and a center stand.
- FIG. 8: is a rear view showing the center stand device in an upright state.
- FIG. 9: is a rear view showing the center stand device in a stored state.
- FIG. 10: is a bottom view showing the center stand device in a stored state.
- FIG. 11: is a bottom view showing the center stand device in an upright state.

### DETAILED DESCRIPTION OF THE PREFERRED EMBODIMENTS

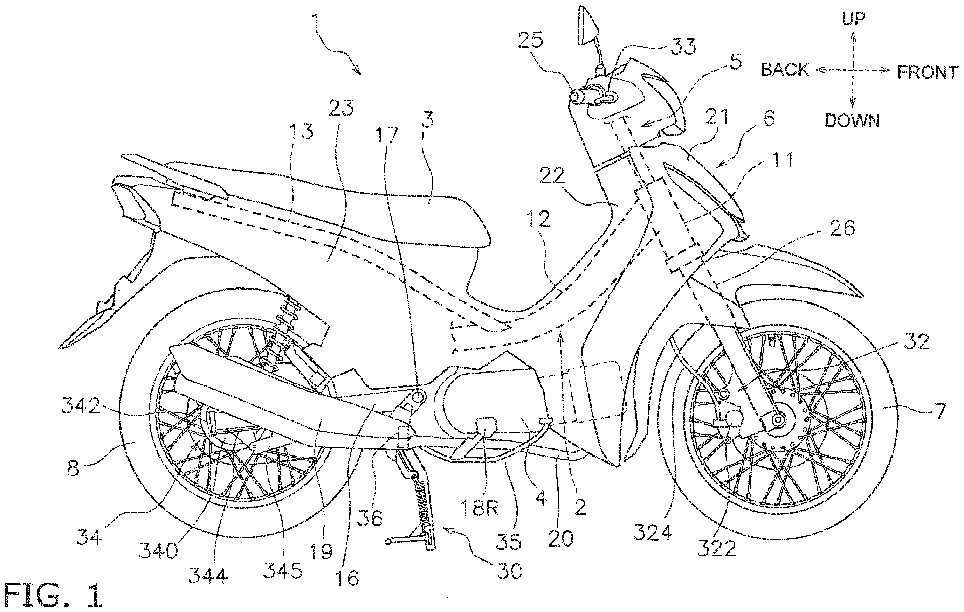

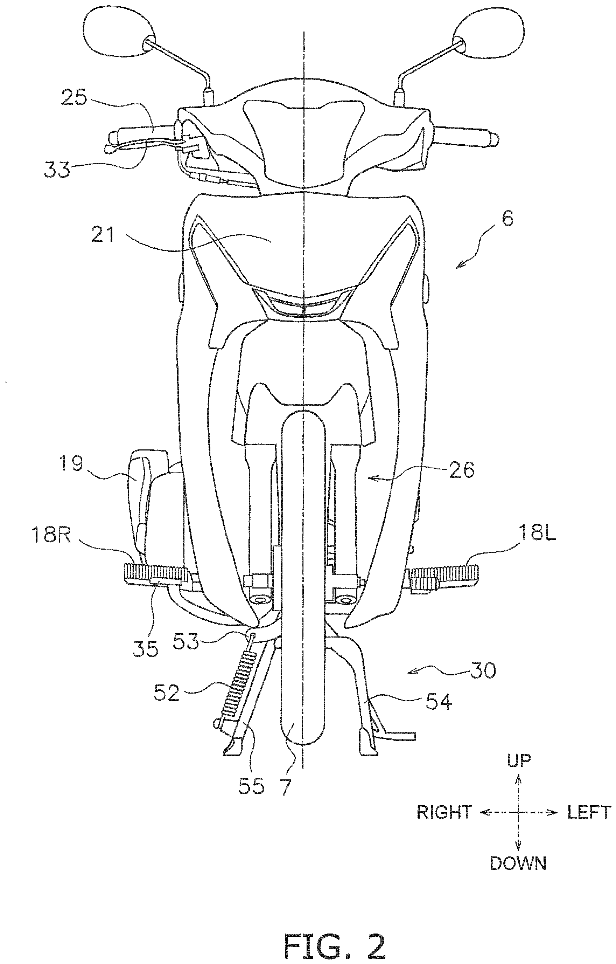

Hereinafter, a straddled vehicle according to an exemplary embodiment will be described with reference to the attached drawings. FIG. 1 is a side view of a straddled vehicle 1 according to the exemplary embodiment. FIG. 2 is a front view of the straddled vehicle 1 according to the exemplary embodiment. The saddled vehicle 1 is a so-called moped type vehicle. As shown in FIG. 1 and FIG. 2, the straddled vehicle 1 includes a vehicle body frame 2, a seat 3, an engine 4, a steering device 5, a vehicle body cover 6, a front wheel 7, and a rear wheel 8.

In the present specification, the front, back, left and right directions refer to the directions as viewed from the rider seated on the seat 3. The term "connection" includes not only a direct connection but also an indirect connection. In addition, the term "connection" is not limited to cases where separate members are fixed to each other, but also includes cases where a plurality of portions are continuous in an integral member.

The phrase "inward in the vehicle width direction" means a direction toward the center of the saddled vehicle 1 in the vehicle width direction. The phrase "outward in the vehicle width direction" means a direction that is opposite to the inward direction in the vehicle width direction. That is, the phrase "outward in the vehicle width direction" refers to a direction away from the center of the saddled vehicle 1 in the vehicle width direction.

The vehicle body frame 2 includes a head pipe 11, a main frame 12, and a rear frame 13. The head pipe 11 is disposed at the center in the vehicle width direction. The head pipe 11 extends rearward and upward. The main frame 12 extends rearward and downward from the head pipe 11. The rear frame 13 extends rearward and upward from the main frame 12.

The vehicle body cover 6 includes a front cover 21, a leg shield 22, and a rear cover 23. The front cover 21 is disposed in front of the head pipe 11. The leg shield 22 is disposed behind the front cover 21. The leg shield 22 is disposed in front of the seat 3. The rear cover 23 is disposed below the seat 3.

The steering device 5 includes a handle 25 and a front fork 26. The handle 25 is disposed above the head pipe 11 and more forward than the seat 3. The handle 25 is connected to the upper end of the front fork 26. The front fork 26 is inserted in the head pipe 11 and is rotatably supported by the head pipe 11. The front wheel 7 is rotatably supported by the front fork 26.

The seat 3 is disposed more rearward than the head pipe 11. The seat 3 is disposed above the rear frame 13. The engine 4 is disposed below the main frame 12. A rear arm 16 is disposed behind the engine 4. The rear arm 16 is rotatably supported around a pivot shaft 17. The rear arm 16 rotatably supports the rear wheel 8.

The straddled vehicle 1 includes left and right footrests 18L and 18R. The footrests 18L and 18R are the portions on which the rider places his/her feet. The footrests 18L is disposed on the left side of the engine 4. The footrests 18R is disposed on the right side of the engine 4. The footrests 18L and 18R extend in the vehicle width direction.

A silencer 19 is disposed on the side of the rear wheel 8. In a side view of the vehicle, the silencer 19 overlaps with the rear wheel 8. The silencer 19 is connected to an exhaust pipe 20. The exhaust pipe 20 extends forward from the silencer 19 and is connected to the engine 4.

The straddled vehicle 1 includes a center stand device 30. The center stand device 30 is supported by the vehicle body frame 2 so as to be movable between an upright position and a stored position. FIGS. 1 and 2 show the center stand device 30 in the upright position. As shown in FIG. 1, the center stand device 30 is disposed behind the engine 4. The center stand device 30 will be described later in detail.

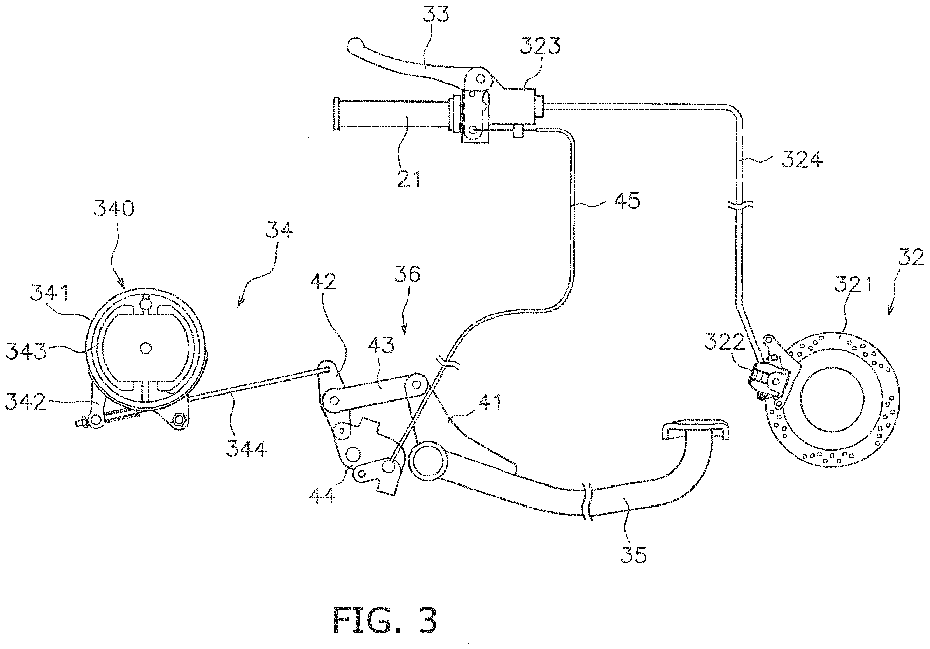

Next, a braking system of the saddled type vehicle 1 will be described. FIG. 3 is a schematic diagram showing a configuration of the braking system. As shown in FIG. 3, the braking system includes a front brake unit 32, a brake lever 33, a rear brake unit 34, a brake pedal 35, and an interlocking brake device 36.

The front brake unit 32 applies a braking force to the front wheel 7 in accordance with the operation of the brake lever 33. As shown in FIG. 1, the brake lever 33 is attached to the handle 25. The front brake unit 32 is a disc brake type device.

The front brake unit 32 includes a brake disc 321, a brake caliper 322, a master cylinder 323, and a front brake transmission member 324. The brake disk 321 is attached to the front wheel 7. The master cylinder 323 converts the operation force of the brake lever 33 into a hydraulic pressure. The front brake transmission member 324 connects the master cylinder 323 and the brake caliper 322. The front brake transmission member 324 is a tube that transmits the hydraulic pressure of the master cylinder 323 to the brake caliper 322.

In response to the operation of the brake lever 33 by the driver, the brake fluid in the master cylinder 323 is pressurized, and the hydraulic pressure is transmitted to the brake caliper 322 via the front brake transmission member 324. The brake caliper 322 is actuated by the hydraulic pressure to sandwich the brake disk 321. Thus the front wheel 7 is braked.

In response to the operation of the brake pedal 35, the rear brake unit 34 applies a braking force to the rear wheel 8. As shown in FIG. 1, the brake pedal 35 is disposed in front of the footrest 18R. The rear brake unit 34 is a drum brake type device.

The rear brake unit 34 includes a rear brake body 340 and a rear brake transmission member 344. The rear brake body 340 is attached to the rear wheel 8. The rear brake body 340 includes a drum 341, a brake arm 342, and a brake shoe 343. The drum 341 is attached to the rear wheel 8 and rotates together with the rear wheel 8. The brake shoe 343 is pressed against the drum 341 as the brake arm 342 is pulled. Thus the rear wheel 8 is braked.

The rear brake transmission member 344 is connected to the brake arm 342 and extends forward from the brake arm 342. The rear brake transmission member 344 is connected to the brake pedal 35 via the interlocking brake device 36. The rear brake transmission member 344 is a brake shaft that transmits the operation force of the brake pedal 35 to the rear brake unit 34. However, the rear brake transmission member 344 may be a brake wire.

As shown in FIG. 1, the interlocking brake device 36 is disposed more rearward than the engine 4. The interlocking brake device 36 is disposed inward in the vehicle width direction of the silencer 19. As seen in the side view of the vehicle, at least a portion of the interlocking brake device 36 overlaps with the silencer 19.

As shown in FIG. 3, the interlocking brake device 36 includes a pedal arm 41, an equalizer 42, a first link member 43, a second link member 44, and an interlocking brake transmission member 45. The pedal arm 41 is attached to the brake pedal 35. The pedal arm 41 rotates together with the brake pedal 35.

The equalizer 42 distributes the operation force of the brake pedal 35 to the front brake unit 32 and the rear brake unit 34. The equalizer 42 is connected to the pedal arm 41 via the first link member 43. The first link member 43 is rotatably connected with respect to the pedal arm 41. The equalizer 42 is rotatably connected with respect to the first link member 43. The second link member 44 is rotatably connected with respect to the equalizer 42. The rear brake transmission member 344 is connected to the equalizer 42. The equalizer 42 is connected to the front brake unit 32 via the second link member 44 and the interlocking brake transmission member 45. The interlocking brake transmission member 45 is connected to the front brake unit 32.

The operation of the brake pedal 35 is transmitted to the equalizer 42 via the pedal arm 41 and the first link member 43. In response to the operation of the brake pedal 35, the equalizer 42 pulls the rear brake transmission member 344 and via the second link member 44, pulls the interlock brake transmission member 45 as well. As a result, the equalizer 42 distributes the operation force of the brake pedal 35 to the front brake unit 32 and the rear brake unit 34.

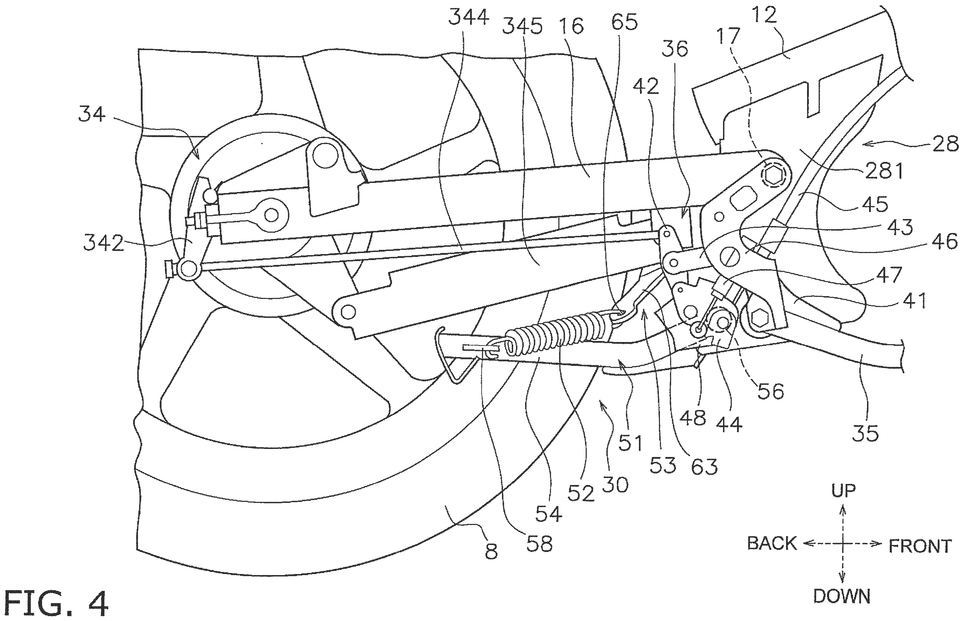

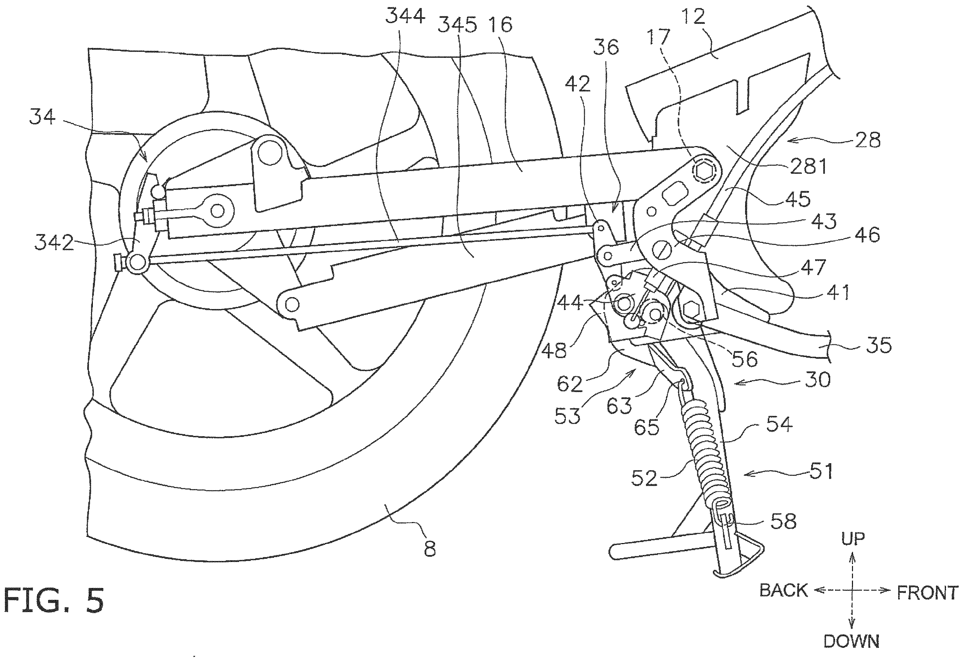

FIGS. 4 and 5 are side views showing a structure around the interlocking brake device 36 and the center stand device 30. The view of FIG. 4 shows the center stand device 30 in a stored state. The view of FIG. 5 shows the center stand device 30 in an upright state. Note that in following description of the drawings, some of the configurations of the parts such as the silencer 19 and an exhaust pipe 20 are omitted.

As shown in FIGS. 4 and 5, the interlocking brake device 36 includes a cover member 46. The cover member 46 is disposed outward in the vehicle width direction of the pedal arm 41 and the first link member 43. As seen in the side view of the vehicle, the cover member 46 overlaps the pedal arm 41 and the first link member 43. The interlocking brake device 36 includes a switch 47 for turning on the taillight. The switch 47 is connected to the second link member 44.

The vehicle body frame 2 includes a pivot frame 28. The pivot frame 28 is connected to the main frame 12. The pivot frame 28 is disposed in front of the rear wheel 8. The pivot frame 28 supports the rear arm 16 via the pivot shaft 17. The pivot frame 28 rotatably supports the brake pedal 35. The pivot frame 28 supports the interlocking brake device 36.

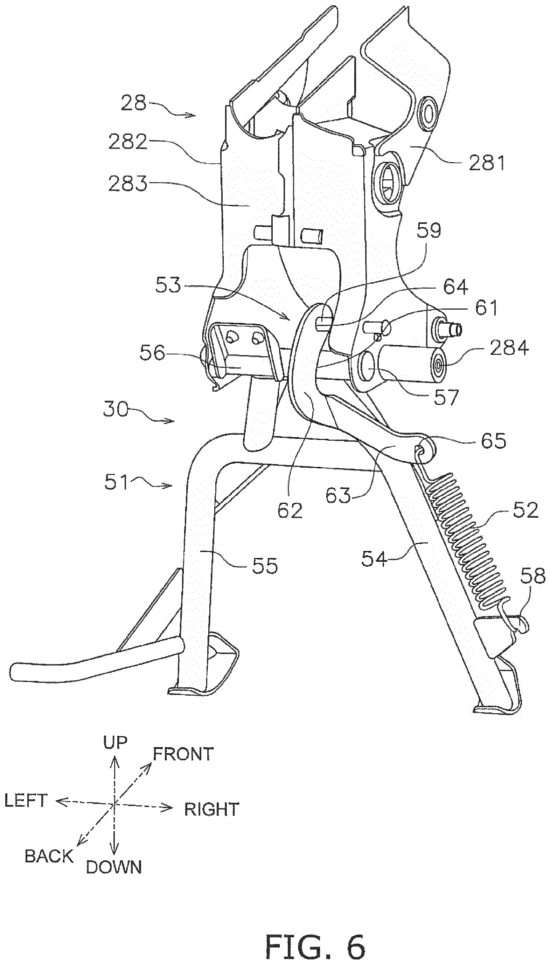

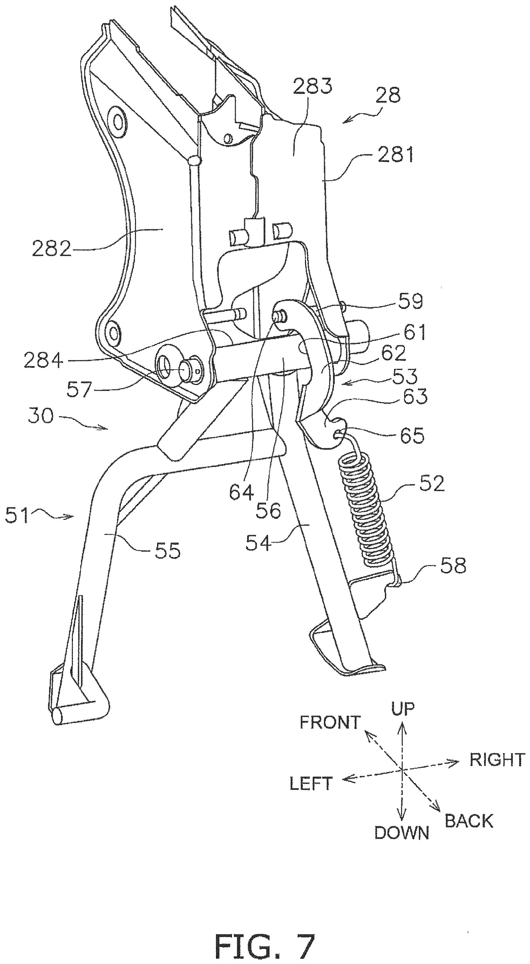

FIGS. 6 and 7 are perspective views of the pivot frame 28 and the center stand device 30. As shown in FIGS. 6 and 7, the pivot frame 28 includes a first side portion 281, a second side portion 282, and a coupling portion 283. In the present exemplary embodiment, the first side portion 281 is the right side surface of the pivot frame 28. The second side portion 282 is the left side surface of the pivot frame 28. The first side portion 281 and the second side portion 282 are disposed at intervals in the vehicle width direction. The coupling portion 283 connects the first side portion 281 and the second side portion 282. A pedal support shaft 284 is connected to the pivot frame 28. The pivot frame 28 supports the brake pedal 35 via the pedal support shaft 284.

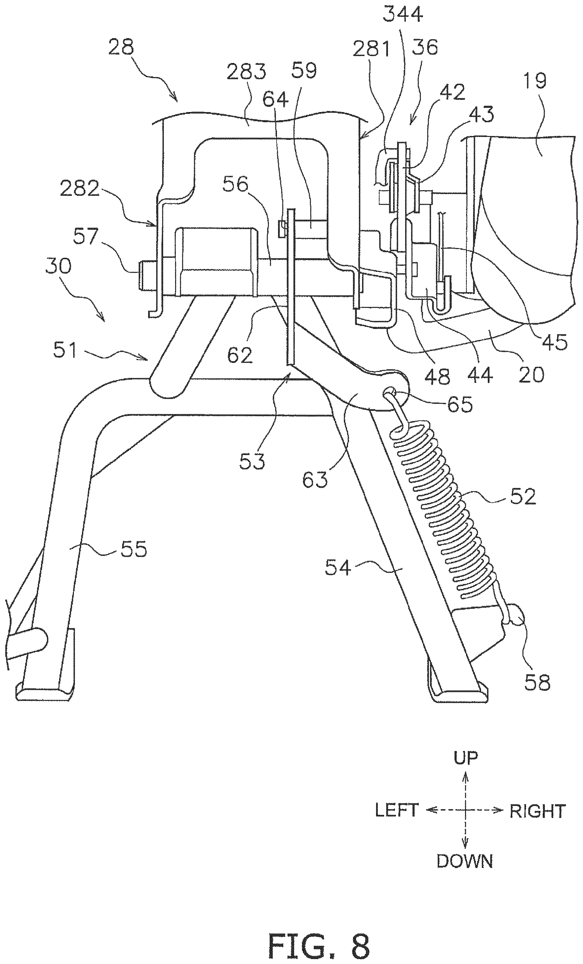

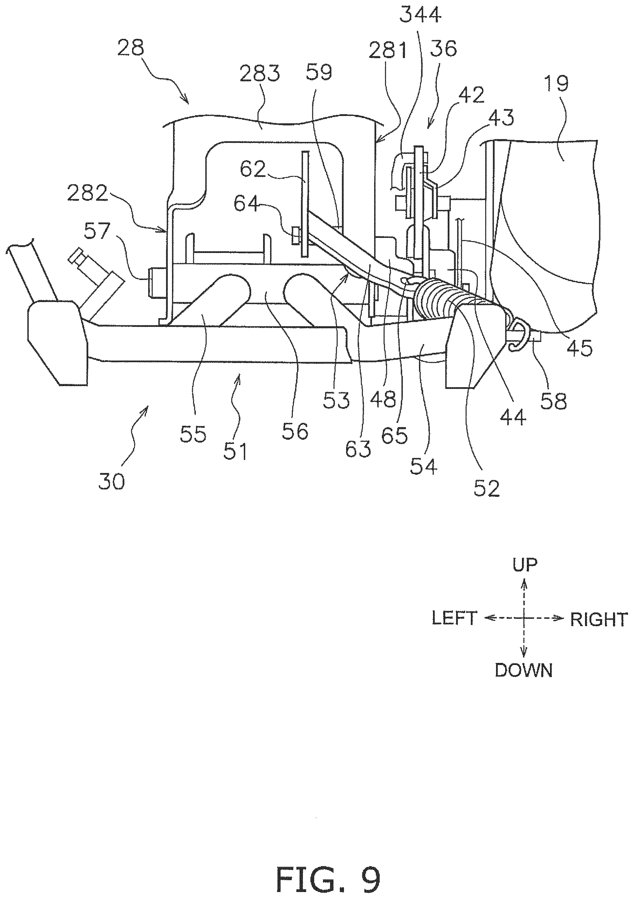

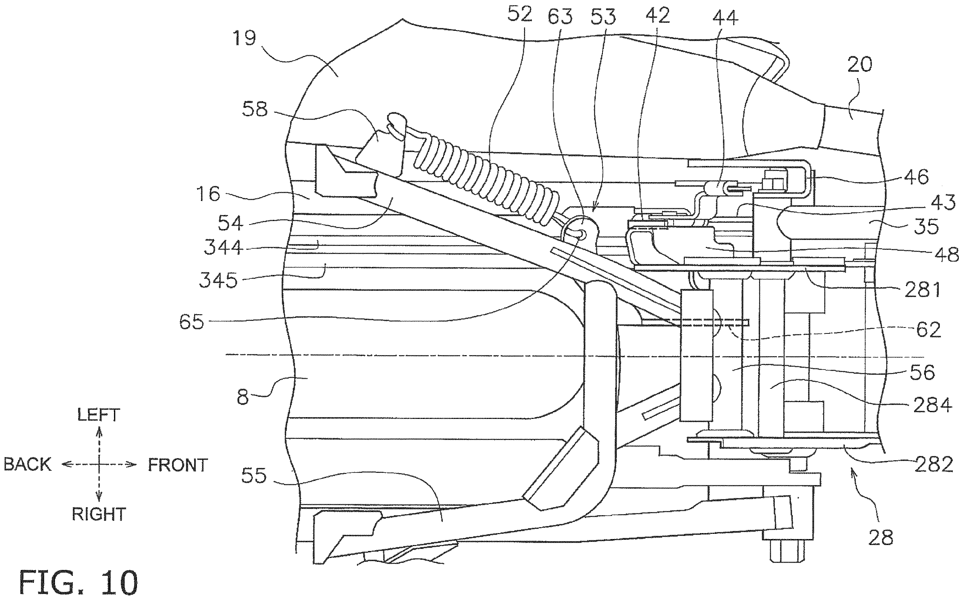

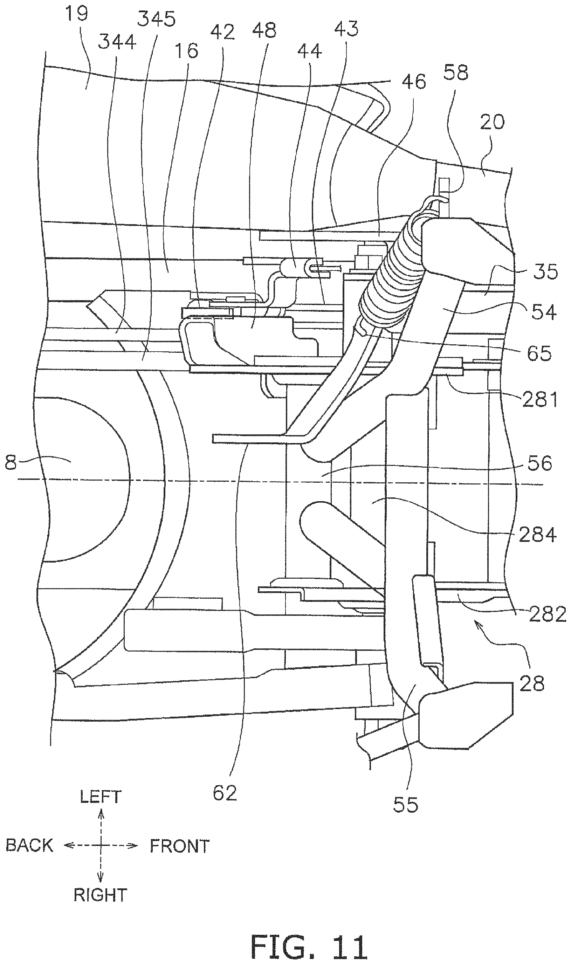

FIGS. 8 and 9 are rear views showing the structure around the interlocking brake device 36 and the center stand device 30. The view of FIG. 8 shows the center stand device 30 in the upright state. The view of FIG. 9 shows the center stand device 30 in the stored state. FIGS. 10 and 11 are bottom views showing the structure around the interlocking brake device 36 and the center stand device 30. The view of FIG. 10 shows the center stand device 30 in the stored state. The view of FIG. 11 shows the center stand device 30 in the upright state.

As shown in FIGS. 8 and 9, the interlocking brake device 36 is located more outward than the pivot frame 28 in the vehicle width direction. In the present exemplary embodiment, the interlocking brake device 36 is disposed on the right side of the pivot frame 28. More specifically, the interlocking brake device 36 is located more outward than the first side portion 281 in the vehicle width direction. The interlocking brake device 36 is located on the right side of the first side portion 281.

A stay 48 is attached to the first side portion 281. The interlocking brake device 36 is attached to the first side portion 281 via the stay 48. The second link member 44 is rotatably supported by the stay 48.

As shown in FIGS. 4 and 5, at least a portion of the interlocking brake device 36 overlaps with the pivot frame 28 as seen in the side view of the vehicle. More specifically, the brake pedal 35, the brake arm 342, the equalizer 42, the first link member 43, the second link member 44, and the cover member 46 are located more outward than the pivot frame 28 in the vehicle width direction. In the side view of the vehicle, the pedal arm 41 overlaps with the pivot frame 28. In the side view of the vehicle, the second link member 44 overlaps with the pivot frame 28. In the side view of the vehicle, the cover member 46 overlaps with the pivot frame 28.

At least a portion of the equalizer 42 is disposed more rearward than the pivot frame 28. The equalizer 42 moves back and forth in accordance with the operation of the brake pedal 35. At least a portion of the movable range of the equalizer 42 is located more rearward than the pivot frame 28. At least a portion of the movable range of the equalizer 42 may overlap with the pivot frame 28 as seen in the side view of the vehicle.

Next, the center stand device 30 will be described in detail. The center stand device 30 is rotatably supported by the pivot frame 28. The center stand device 30 includes a stand main body 51, an urging member 52, and a link mechanism 53. The stand main body 51 is rotatably supported by the pivot frame 28. The stand main body 51 includes a first leg portion 54, a second leg portion 55, and a shaft portion 56.

The first leg portion 54 and the second leg portion 55 are disposed at intervals in the vehicle width direction. When the center stand device 30 is in the upright position, the first leg portion 54 and the second leg portion 55 extend downward from the pivot frame 28 as seen in the side view of the vehicle. When the center stand device 30 is in the stored position, the first leg portion 54 and the second leg portion 55 extend rearward from the pivot frame 28 as seen in the side view of the vehicle.

The shaft portion 56 extends in the vehicle width direction. The shaft portion 56 is supported by the pivot frame 28. The shaft portion 56 has a pipe-like shape. The shaft portion 56 is disposed between the first side portion 281 and the second side portion 282. As shown in FIG. 7, the shaft portion 56 is supported by the pivot frame 28 by means of a pin member 57 that is passed through a through hole of the shaft portion 56.

The urging member 52 is a coil spring and urges the stand main body 51. The urging member 52 urges the center stand device 30 toward the upright position in a state in which the center stand device 30 is located more to the upright position side with respect to the neutral position between the upright position and the storage position. The urging member 52 urges the center stand device 30 toward the stored position in a state in which the center stand device 30 is located more to the storage position side with respect to the neutral position. Therefore, it is possible to stably hold the center stand device 30 in the upright position and the stored position.

The urging member 52 is attached to the first leg portion 54. Specifically, the stand main body 51 includes a locking portion 58. The locking portion 58 is connected to the first leg portion 54. The locking portion 58 protrudes outward in the vehicle width direction from the first leg portion 54. The urging member 52 is locked with the locking portion 58.

In a state in which the center stand device 30 is positioned at the upright position, the urging member 52 is located below the interlocking brake device 36. The urging member 52 is located more rearward than the interlocking brake device 36 in a state in which the center stand device 30 is positioned at the stored position. Under the state in which the center stand device 30 is positioned at the stored position, at least a portion of the urging member 52 overlaps with the rear wheel 8 as seen in the side view of the vehicle.

The link mechanism 53 is rotatably supported with respect to the pivot frame 28. As shown in FIGS. 7 and 8, a support member 59 is connected to the pivot frame 28. More specifically, the support member 59 is attached to an inner surface of the first side portion 281. The support member 59 projects inward in the vehicle width direction from the inner surface of the first side portion 281. The link mechanism 53 is rotatably supported by the support member 59.

A support position of the link mechanism 53 by the support member 59 is located more forward than a support position of the stand main body 51 by the pivot frame 28. The support position of the link mechanism 53 by the support member 59 is located more inward than the pivot frame 28 in the vehicle width direction. That is, the link mechanism 53 is supported by the support member 59 at a position between the first side portion 281 and the second side portion 282. The support position of the link mechanism 53 by the support member 59 is located more forward than the equalizer 42. The support position of the link mechanism 53 by the support member 59 is located more rearward than the pedal arm 41.

The urging member 52 is attached to the link mechanism 53. As shown in FIGS. 8 and 9, the attachment position of the urging member 52 to the link mechanism 53 is located more outward than the first leg portion 54 in the vehicle width direction. The attachment position of the urging member 52 to the link mechanism 53 is located more outward than the pivot frame 28 in the vehicle width direction.

The link mechanism 53 rotates as the center stand device 30 moves between the stored position and the upright position. As shown in FIGS. 6 and 7, the link mechanism 53 includes a recess portion 61. The recess portion 61 has a depressed shape so as to avoid the shaft portion 56 in the movable range of the link mechanism 53. The link mechanism 53 has a curve shape so as to avoid the interlocking brake device 36 in the movable range of the link mechanism 53.

As shown in FIG. 4, in the state in which the center stand device 30 is positioned at the stored position, at least a portion of the link mechanism 53 overlaps with the equalizer 42 as seen in the side view of the vehicle. As shown in FIG. 10, the link mechanism 53 does not overlap with the equalizer 42 as seen in the plan view of the vehicle in the state in which the center stand device 30 is positioned at the stored position. At least a portion of the link mechanism 53 is located more rearward than the equalizer 42 in the state in which the center stand device 30 is positioned at the stored position.

As shown in FIG. 5, in the state in which the center stand device 30 is positioned at the upright position, at least a portion of the link mechanism 53 is located below the interlocking brake device 36. In the plan view of the vehicle, when the center stand device 30 moves from the stored position to the upright position, the link mechanism 53 passes through a position that overlaps with the interlocking brake device 36.

As shown in FIGS. 6 and 7, the link mechanism 53 includes a first portion 62 and a second portion 63. The link mechanism 53 has a curve shape between the first portion 62 and the second portion 63. The first portion 62 includes a first attachment portion 64 attached to the support member 59. The second portion 63 includes a second attachment portion 65 to which the urging member 52 is attached. The first attachment portion 64 is located more inward than the first side portion 281 in the vehicle width direction. The second attachment portion 65 is located more outward than the first side portion 281 in the vehicle width direction.

As shown in FIGS. 4, 9 and 10, in the state in which the center stand device 30 is positioned at the stored position, the first portion 62 is located more inward than the pivot frame 28 in the vehicle width direction and extends toward the back from a position more forward than the equalizer 42. In the state in which the center stand device 30 is positioned at the stored position, the second portion 63 extends from a position more inward than the pivot frame 28 in the vehicle width direction passing behind the equalizer 42 to a position more outward than the pivot frame 28 in the vehicle width direction.

As shown in FIGS. 5, 8, and 11, in the state in which the center stand device 30 is positioned at the upright position, the first portion 62 extends downward from a position more inward than the pivot frame 28 in the vehicle width direction. In the state in which the center stand device 30 is positioned at the upright position, the second portion 63 extends from a position more inward than the pivot frame 28 in the vehicle width direction passing under the pivot frame 28 to a position more outward than the pivot frame 28 in the vehicle width direction.

In the state in which the center stand device 30 is positioned at the stored position, the first portion 62 overlaps with the equalizer 42 as seen in the side view of the vehicle. In the state in which the center stand device 30 is positioned at the stored position, the second portion 63 is located behind the equalizer 42 as seen in the side view of the vehicle. In the state in which the center stand device 30 is positioned at the stored position, the second portion 63 overlaps with the pivot frame 28 as seen in the rear view of the vehicle.

In the state in which the center stand device 30 is positioned at the upright position, the second portion 63 is located lower than the equalizer 42 and more forward than the equalizer 42 in a side view of the vehicle. In the state in which the center stand device 30 is positioned at the upright position, the second portion 63 is located lower than the pivot frame 28 in the rear view of the vehicle.

As shown in FIG. 4, the rear brake unit 34 includes a tension bar 345. The tension bar 345 is connected to the rear brake body 340 and the rear arm 16. The tension bar 345 extends forward from the rear brake body 340 and is disposed below the rear arm 16.

In the state in which the center stand device 30 is positioned at the stored position, the second portion 63 is located below the tension bar 345 and overlaps the tension bar 345 as seen in the plan view of the vehicle. In the state in which the center stand device 30 is positioned at the stored position, the second portion 63 is located between the tension bar 345 and the first leg portion 54.

In the saddled vehicle 1 according to the present exemplary embodiment described above, the urging member 52 is supported by the pivot frame 28 via the link mechanism 53. The equalizer 42 is located more outward than the pivot frame 28 in the vehicle widthwise direction, whereas the support position of the link mechanism 53 by the support member 59, that is, the first attachment portion 64 is located at a position more inward than the pivot frame 28 in the vehicle width direction. With this configuration, the interference between the urging member 52 and the equalizer 42 can be easily avoided while limiting upsizing of the saddled vehicle 1. Further, the attachment position of the urging member 52 in the link mechanism 53, that is, the second attachment portion 65 is located more outward than the first leg portion 54 in the vehicle width direction. Therefore, it is possible to reduce deterioration of the assemblability of the urging member 52 to the center stand device 30.

The attachment position of the urging member 52 in the link mechanism 53 is located at a position more outward than the pivot frame 28 in the vehicle width direction. Therefore, the assemblability of the urging member 52 can be further improved.

The support position of the link mechanism 53 by the support member 59 is located more forward than the support position of the stand main body 51 by the pivot frame 28. In the case where the link mechanism 53 is disposed as described above, the link mechanism 53 easily interferes with the equalizer 42 when the link mechanism 53, similar to the equalizer 42, is disposed more outward than the pivot frame 28 in the vehicle width direction. However, in the saddled vehicle 1 according to the present exemplary embodiment, the support position of the link mechanism 53 by the support member 59 is located more inward than the pivot frame 28 in the vehicle width direction. Therefore, the interference between the urging member 52 and the equalizer 42 can be easily avoided while limiting upsizing of the saddled vehicle 1.

The link mechanism 53 includes the recess portion 61 depressed so as to avoid the shaft portion 56. Thereby, the interference between the link mechanism 53 and the shaft portion 56 can be avoided.

The link mechanism 53 has a curve shape including the first portion 62 and the second portion 63. With this configuration, the urging member 52 can be supported by the link mechanism 53 while avoiding the interference between the link mechanism 53 and the equalizer 42.

At least a portion of the link mechanism 53 overlaps with the equalizer 42 as seen in the side view of the vehicle in the state where the center stand device 30 is positioned at the stored position. Therefore, the link mechanism 53 and the equalizer 42 can be compactly disposed.

At least a portion of the urging member 52 overlaps the rear wheel 8 as seen in the side view of the vehicle in the state where the center stand device 30 is positioned at the stored position. Thus, a disposition space of the center stand device 30 is particularly narrow in the small saddled vehicle 1 having a small wheel base. However, in the saddled vehicle 1 according to the present exemplary embodiment, the interference between the urging member 52 and the equalizer 42 can be easily avoided even in such a small vehicle.

In the state where the center stand device 30 is positioned at the stored position, at least a portion of the link mechanism 53 is located below the tension bar 345 and overlaps the tension bar 345 as seen in the plan view of the vehicle. Therefore, the interference between the tension bar 345 and the link mechanism 53 can be avoided while disposing the tension bar 345 and the link mechanism 53 compactly as well.

The saddled vehicle 1 is not limited to a moped type vehicle but may be another type of vehicle such as a scooter type or a sports type. The engine 4 is not limited to an internal combustion engine, and may be an electric motor. The shape of the vehicle body frame 2 is not limited to the one described above and may be changed to other shapes. The number of the front wheels 7 is not limited to one, and may be two or more. The number of the rear wheels 8 is not limited to one, and may be two or more.

The configuration of the front brake unit 32 is not limited to the one described above, and may be changed. For example, the front brake unit 32 may be a brake device of another type such as a drum brake. In that case, the front brake transmission member 324 may be a wire that transmits the operation force of the brake lever 33 to the front brake unit 32.

The rear brake unit 34 is not limited to the one described above, and may be changed. For example, the rear brake unit 34 may be a brake device of another type such as a disc brake. In that case, the rear brake transmission member 344 may be a tube that transmits the hydraulic pressure of the master cylinder 323 to the brake caliper 322.

The configuration of the interlocking brake device 36 is not limited to the one described above, and may be changed. For example, the first link member 43 and/or the second link member 44 may be omitted. The position or the shape of the equalizer 42 may be changed.

The configuration of the center stand device 30 is not limited to the one described above, and may be changed. For example, the position or shape of the stand main body 51, the urging member 52, or the link mechanism 53 may be changed.

## Claims

1. A saddled vehicle comprising:
a vehicle body frame (2);
a front wheel (7) rotatably supported by the vehicle body frame (2);
a rear wheel (8) rotatably supported by the vehicle body frame (2);
a front brake unit (32) configured to apply a braking force to the front wheel (7);
a rear brake unit (34) configured to apply a braking force to the rear wheel (8);
a brake pedal (35) rotatably supported by the body frame (2);
an equalizer (42) that is connected to the brake pedal (35) and configured to distribute an operation force of the brake pedal (35) to the front brake unit (32) and the rear brake unit (34); and
a center stand device (30) supported by the vehicle body frame (2) so as to be movable between an upright position and a stored position, wherein
the vehicle body frame (2) includes
a pivot frame (28) rotatably supporting the center stand device (30); and
a support member (59) connected to the pivot frame (28),
the center stand device (30) includes
a stand main body (51) including a first leg portion (54) and a second leg portion (55) disposed at intervals in a vehicle width direction and rotatably supported by the pivot frame (28); and **characterised in that**
an urging member (52) attached to the first leg portion (54) for urging the stand main body (51); and
a link mechanism (53) rotatably supported by the support member (59) and having the urging member (52) attached thereto,
the equalizer (42) is located more outward than the pivot frame (28) in the vehicle width direction,
at least a portion of the link mechanism (53) overlaps with the equalizer (42) as seen in a side view of the vehicle,
a support position of the link mechanism (53) by the support member (59) is located more inward than the pivot frame (28) in the vehicle width direction, and
an attachment position (65) of the urging member (52) in the link mechanism (53) is located more outward than the first leg portion (54) in the vehicle width direction.

2. The saddled vehicle according to claim 1, wherein the attachment position of the urging member (52) in the link mechanism (53) is located more outward than the pivot frame (28) in the vehicle width direction.

3. The saddled vehicle according to claim 1 or 2, wherein the support position of the link mechanism (53) by the support member (59) is located more forward than a support position of the stand main body (51) by the pivot frame (28).

4. The saddled vehicle according to any one of claims 1 to 3, wherein the urging member (52) urges the center stand device (30) toward the upright position in a state in which the center stand device (30) is located more to the upright position side with respect to a neutral position between the upright position and the stored position, and the urging member (52) urges the center stand device (30) toward the stored position in a state in which the center stand device (30) is located more to a stored position side with respect to the neutral position.

5. The saddled vehicle according to any one of claims 1 to 4, wherein the stand main body (51) further includes a shaft portion (56) extending in the vehicle width direction and supported by the pivot frame (28), and
the link mechanism (53) includes a recess portion (61) depressed to avoid the shaft portion (56).

6. The saddled vehicle according to any one of claims 1 to 5, wherein the link mechanism (53) includes:
a first portion (62) extending rearward from a position more inward than the pivot frame (28) in the vehicle width direction and more forward than the equalizer (42) in a state where the center stand device (30) is positioned at the stored position; and
a second portion (63) extending from a position more inward than the pivot frame (28) in the vehicle width direction and passing behind the equalizer (42) to a position more outward than the pivot frame (28) in the vehicle width direction in a state where the center stand device (30) is positioned at the stored position.

7. The saddled vehicle according to any one of claims 1 to 5, wherein the link mechanism (53) includes:
a first portion (62) extending downward from a position more inward than the pivot frame (28) in the vehicle width direction in a state where the center stand device (30) is positioned at the upright position; and
a second portion (63) extending from a position more inward than the pivot frame (28) in the vehicle width direction and passing under the pivot frame (28) to a position more outward than the pivot frame (28) in the vehicle width direction in a state where the center stand device (30) is positioned at the upright position.

8. The saddled vehicle according to any one of claims 1 to 7, wherein at least a portion of the link mechanism (53) overlaps with the equalizer (42) as seen in a side view of the vehicle in a state where the center stand device (30) is positioned at the stored position.

9. The saddled vehicle according to any one of claims 1 to 8wherein the link mechanism (53) does not overlap with the equalizer (42) as seen in a plan view of the vehicle in a state where the center stand device (30) is positioned at the stored position.

10. The saddled vehicle according to any one of claims 1 to 9, wherein the support position of the link mechanism (53) by the support member (59) is located more forward than the equalizer (42), and at least a portion of the link mechanism (53) is located more rearward than the equalizer (42) in a state where the center stand device (30) is positioned at the stored position.

11. The saddled vehicle according to any one of claims 1 to 10, wherein at least a portion of the urging member (52) overlaps the rear wheel (8) as seen in a side view of the vehicle in a state where the center stand device (30) is positioned at the stored position.

12. The saddled vehicle according to any one of claims 1 to 11, wherein the rear brake unit (34) includes a drum brake and a tension bar (345) connected to the drum brake and extending forward from the drum brake, and
in a state where the center stand device (30) is positioned at the stored position, at least a portion of the link mechanism (53) is located below the tension bar (345) and overlaps the tension bar (345) as seen in a plan view of the vehicle.

13. The saddled vehicle according to any one of claims 1 to 12, wherein at least a portion of the link mechanism (53) is located lower than the equalizer (42) in a state where the center stand device (30) is positioned at the upright position.

14. The saddled vehicle according to any one of claims 1 to 13, wherein at least a portion of the link mechanism (53) is located more forward than a rear end of the equalizer (42) in a state where the center stand device (30) is positioned at the upright position.

15. The saddled vehicle according to any one of claims 1 to 14, wherein the rear brake unit (34) includes:
a rear brake body (340) attached to the rear wheel (8); and
a rear brake transmission member (344) connected to the rear brake body (340) and
extending forward from the rear brake body (340), and
the equalizer (42) is connected to the rear brake transmission member (344) and the brake pedal (35).

## Patentansprüche

1. Ein Sattel-Fahrzeug, das umfasst:
einen Fahrzeug-Körper-Rahmen (2);
ein Vorder-Rad (7), das drehbar durch den Fahrzeug-Körper-Rahmen (2) gelagert ist;
ein Hinter-Rad (8), das drehbar durch den Fahrzeug-Körper-Rahmen (2) gelagert ist;
eine Vorder-Brems-Einheit (32), die konfiguriert ist, um eine Brems-Kraft auf das Vorder-Rad (7) aufzubringen;
eine Hinter-Brems-Einheit (34), die konfiguriert ist, um eine Brems-Kraft auf das Hinter-Rad (8) aufzubringen;
ein Brems-Pedal (35), das drehbar durch den Körper-Rahmen (2) gelagert ist;
einen Ausgleicher (42), der mit dem Brems-Pedal (35) verbunden ist, und konfiguriert ist, um eine Betätigungs-Kraft von dem Brems-Pedal (35) zu der Vorder-Brems-Einheit (32) und der Hinter-Brems-Einheit (34) zu verteilen; und
eine Mitten-Ständer-Vorrichtung (30), die durch den Fahrzeug-Körper-Rahmen (2) gelagert ist, so dass sie zwischen einer aufrechten Position und einer gelagerten Position bewegbar ist, wobei der Fahrzeug-Körper-Rahmen (2) beinhaltet einen Schwenk-Rahmen (28), der drehbar die Mitten-Ständer-Vorrichtung (30) lagert; und
ein Lager-Element (59), das mit dem Schwenk-Rahmen (28) verbunden ist,
die Mitten-Ständer-Vorrichtung (30) beinhaltet
einen Ständer-Haupt-Körper (51), der einen ersten Schenkel-Abschnitt (54) und einen zweiten Schenkel-Abschnitt (55), positioniert in Intervallen in einer Fahrzeug-Breiten-Richtung, und drehbar gelagert durch den Schwenk-Rahmen 28, beinhaltet; und
**dadurch gekennzeichnet, dass**
ein Drück-Element (52), das an dem ersten Schenkel-Abschnitt (54) zum Drücken des Ständer-Haupt-Körpers (51) angebracht ist; und
einen Lenker-Mechanismus (53), der drehbar durch das Lager-Element (59) gelagert ist und das Drück-Element (52) angebracht daran hat,
der Ausgleicher (42) ist mehr nach außen angeordnet als der Schwenk-Rahmen (28) in der Fahrzeug-Breiten-Richtung,
zumindest ein Abschnitt von dem Lenker-Mechanismus (53) überlappt mit dem Ausgleicher (42), wenn gesehen in einer Seiten-Ansicht von dem Fahrzeug, eine Lager-Position von dem Lenker-Mechanismus (53) durch das Lager-Element (59) ist weiter innen angeordnet als der Schwenk-Rahmen (28) in der Fahrzeug-Breiten-Richtung, und
eine Anbringungs-Position (65) von dem Drück-Element (52) in dem Lenker-Mechanismus (53) ist weiter außen angeordnet als der erste Schenkel-Abschnitt (54) in der Fahrzeug-Breiten-Richtung.

2. Das Sattel-Fahrzeug gemäß Anspruch 1, wobei die Anbringungs-Position von dem Drück-Element (52) in dem Lenker-Mechanismus (53) weiter außen angeordnet ist als der Schwenk-Rahmen (28) in der Fahrzeug-Breiten-Richtung.

3. Das Sattel-Fahrzeug gemäß zu Anspruch 1 oder 2, wobei die Lager-Position von dem Lenker-Mechanismus (53) durch das Lager-Element (59) weiter vorne angeordnet ist als eine Lager-Position von dem Ständer-Haupt-Körper (51) durch den Schwenk-Rahmen (28).

4. Das Sattel-Fahrzeug gemäß zu irgendeinem der Ansprüche 1 bis 3, das Drück-Element (52) die Mitten-Ständer-Vorrichtung (30) in die aufrechte Position drückt, in einem Zustand, in dem die Mitten-Ständer-Vorrichtung (30) weiter zu der aufrechten Positions-Seite angeordnet ist, mit Bezug auf eine Neutral-Position zwischen der aufrechten Position und der gelagerten Position, und das Drück-Element (52) drückt die Mitten-Ständer-Vorrichtung (30) zu der gelagerten Position, in einem Zustand, in dem die Mitten-Ständer-Vorrichtung (30) mehr zu einer gelagerten Positions-Seite angeordnet ist mit Bezug auf die Neutral-Position.

5. Das Sattel-Fahrzeug gemäß zu irgendeinem der Ansprüche 1 bis 4, wobei der Ständer-Haupt-Körper (51) weiter einen Wellen-Abschnitt (56) beinhaltet, der sich in der Fahrzeug-Breiten-Richtung erstreckt und durch den Schwenk-Rahmen (28) gelagert ist, und
der Lenker-Mechanismus (53) beinhaltet einen Ausnehmungs-Abschnitt (61), der eingedrückt ist, um den Wellen-Abschnitt (56) zu vermeiden.

6. Das Sattel-Fahrzeug gemäß zu irgendeinem der Ansprüche 1 bis 5, wobei der Lenker-Mechanismus (53) beinhaltet:
einen ersten Abschnitt (62), der sich nach hinten von einer Position, mehr innen als der Schwenk-Rahmen (28) in der Fahrzeug-Breiten-Richtung, und mehr vorne als der Ausgleicher (42), erstreckt, in einem Zustand, in dem die Mitten-Ständer-Vorrichtung (30) in der gelagerten Position positioniert ist; und
einen zweiten Abschnitt (63), der sich von einer Position, mehr nach innen als der Schwenk-Rahmen (28) in der Fahrzeug-Breiten-Richtung, erstreckt und hinter dem Ausgleicher (42) hindurchtritt, zu einer Position mehr außen als der Schwenk-Rahmen (28) in der Fahrzeug-Breiten-Richtung, in einem Zustand, in dem die Mitten-Ständer-Vorrichtung (30) in der gelagerten Position positioniert ist.

7. Das Sattel-Fahrzeug gemäß zu irgendeinem der Ansprüche 1 bis 5, wobei der Lenker-Mechanismus (53) beinhaltet:
einen ersten Abschnitt (62), der sich nach unten von einer Position, mehr innen als der Schwenk-Rahmen (28) in der Fahrzeug-Breiten-Richtung, erstreckt, in einem Zustand, in dem die Mitten-Ständer-Vorrichtung (30) in der aufrechten Position positioniert ist; und
einen zweiten Abschnitt (63), der sich von einer Position, mehr innen als der Schwenk-Rahmen (28) in der Fahrzeug-Breiten-Richtung, erstreckt und unter dem Schwenk-Rahmen (28) hindurchtritt, zu einer Position, mehr außen als der Schwenk-Rahmen (28) in der Fahrzeug-Breiten-Richtung, in einem Zustand, in dem die Mitten-Ständer-Vorrichtung (30) in der aufrechten Position positioniert ist.

8. Das Sattel-Fahrzeug gemäß zu irgendeinem der Ansprüche 1 bis 7, wobei zumindest ein Abschnitt von dem Lenker-Mechanismus (53) mit dem Ausgleicher (42) überlappt, wenn gesehen in der Seiten-Ansicht von dem Fahrzeug, in einem Zustand, in dem die Mitten-Ständer-Vorrichtung (30) in der gelagerten Position positioniert ist.

9. Das Sattel-Fahrzeug gemäß zu irgendeinem der Ansprüche 1 bis 8, wobei der Lenker-Mechanismus (53) nicht mit dem Ausgleicher (42) überlappt, wenn gesehen in einer Draufsicht von dem Fahrzeug, in einem Zustand, in dem die Mitten-Ständer-Vorrichtung (30) in der gelagerten Position positioniert ist.

10. Das Sattel-Fahrzeug gemäß zu irgendeinem der Ansprüche 1 bis 9, wobei die Lager-Position von dem Lenker-Mechanismus (53) durch das Lager-Element (59) weiter vorne angeordnet ist als der Ausgleicher (42), und zumindest ein Abschnitt von dem Lenker-Mechanismus (53) weiter hinten angeordnet ist als der Ausgleicher (42), in einem Zustand, in dem die Mitten-Ständer-Vorrichtung (30) in der gelagerten Position positioniert ist.

11. Das Sattel-Fahrzeug gemäß zu irgendeinem der Ansprüche 1 bis 10, wobei zumindest ein Abschnitt von dem Drück-Element (52) das Hinter-Rad (8) überlappt, wenn gesehen in einer Seiten-Ansicht von dem Fahrzeug, in einem Zustand, in dem die Mitten-Ständer-Vorrichtung (30) in der gelagerten Position positioniert ist.

12. Das Sattel-Fahrzeug gemäß zu irgendeinem der Ansprüche 1 bis 11, wobei die Hinter-Brems-Einheit (34) eine Trommel-Bremse und eine Spann-Leiste (345) beinhaltet, die mit der Trommel-Bremse verbunden ist, und sich nach vorne von der Trommel-Bremse erstreckt, und
in einem Zustand, in dem die Mitten-Ständer-Vorrichtung (30) in der gelagerten Position positioniert ist, ist zumindest ein Abschnitt von dem Lenker-Mechanismus (53) unterhalb der Spann-Leiste (345) angeordnet, und überlappt die Spann-Leiste (345), wenn gesehen in einer Draufsicht von dem Fahrzeug.

13. Das Sattel-Fahrzeug gemäß zu irgendeinem der Ansprüche 1 bis 12, wobei zumindest ein Abschnitt von dem Lenker-Mechanismus (53) niedriger angeordnet ist als der Ausgleicher (42), in einem Zustand, in dem die Mitten-Ständer-Vorrichtung (30) in der aufrechten Position positioniert ist.

14. Das Sattel-Fahrzeug gemäß zu irgendeinem der Ansprüche 1 bis 13, wobei zumindest ein Abschnitt von dem Lenker-Mechanismus (53) weiter vorne angeordnet ist als ein Rück-Ende von dem Ausgleicher (42), in einem Zustand, in dem die Mitten-Ständer-Vorrichtung (30) in der aufrechten Position positioniert ist.

15. Das Sattel-Fahrzeug gemäß zu irgendeinem der Ansprüche 1 bis 14, wobei die Hinter-Brems-Einheit (34) beinhaltet:
einen Hinter-Brems-Körper (340), der an dem Hinter-Rad (8) angebracht ist; und ein Hinter-Brems-Übertragungs-Element (344), das mit dem Hinter-Brems-Körper (340) verbunden ist, und sich nach vorne von dem Hinter-Brems-Körper (340) erstreckt, und
der Ausgleicher (42) ist mit dem Hinter-Brems-Übertragungs-Element (344) und dem Brems-Pedal (35) verbunden.

## Revendications

1. Véhicule à selle comprenant :
un châssis de corps de véhicule (2) ;
une roue avant (7) supportée de manière rotative par le châssis de corps de véhicule (2) ;
une roue arrière (8) supportée de manière rotative par le châssis de corps de véhicule (2) ;
une unité de frein avant (32) configurée pour appliquer une force de freinage à la roue avant (7) ;
une unité de frein arrière (34) configurée pour appliquer une force de freinage à la roue arrière (8) ;
une pédale de frein (35) supportée de manière rotative par le corps de châssis (2) ;
un balancier (42) qui est connecté à la pédale de frein (35) et configuré pour distribuer une force d'actionnement de la pédale de frein (35) entre l'unité de frein avant (32) et l'unité de frein arrière (34) ; et
un dispositif de béquille centrale (30) supporté par le châssis de corps de véhicule (2) de manière à être mobile entre une position debout et une position stockée, dans lequel
le châssis de corps de véhicule (2) comprend
un châssis de pivot (28) supportant le dispositif de béquille centrale (30) de manière rotative ; et
un élément de support (59) connecté au châssis de pivot (28),
le dispositif de béquille centrale (30) comprend un corps principal de béquille (51) comprenant une première portion de pied (54) et une deuxième portion de pied (55) disposées à intervalles en direction de la largeur du véhicule et supportées de manière rotative par le châssis de pivot (28) ; et
**caractérisé par**
un élément de contrainte (52) attaché à la première portion de pied (54) pour contraindre le corps principal de béquille (51) ; et
un mécanisme de liaison (53) supporté de manière rotative par l'élément de support (59) et auquel est attaché l'élément de contrainte (52), et en ce que
le balancier (42) est situé plus à l'extérieur que le châssis de pivot (28) en direction de la largeur du véhicule,
au moins une portion du mécanisme de liaison (53) chevauche le balancier (42) en vue latérale du véhicule,
une position de support du mécanisme de liaison (53) par l'élément de support (59) est située plus vers l'intérieur que le châssis de pivot (28) en direction de la largeur du véhicule, et
une position de fixation (65) de l'élément de contrainte (52) dans le mécanisme de liaison (53) est située plus à l'extérieur que la première portion de pied (54) en direction de la largeur du véhicule.

2. Véhicule à selle selon la revendication 1, dans lequel la position de fixation de l'élément de contrainte (52) dans le mécanisme de liaison (53) est située plus à l'extérieur que le châssis de pivot (28) en direction de la largeur du véhicule.

3. Véhicule à selle selon la revendication 1 ou 2, dans lequel la position de support du mécanisme de liaison (53) par l'élément de support (59) est située plus en avant qu'une position de support du corps principal de béquille (51) par le châssis de pivot (28).

4. Véhicule à selle selon l'une quelconque des revendications 1 à 3, dans lequel l'élément de contrainte (52) contraint le dispositif de béquille centrale (30) vers la position debout dans un état où le dispositif de béquille centrale (30) est situé plus du côté de la position debout par rapport à une position neutre entre la position debout et la position stockée, et l'élément de contrainte (52) contraint le dispositif de béquille centrale (30) vers la position stockée dans un état où le dispositif de béquille centrale (30) est situé plus du côté de la position stockée par rapport à la position neutre.

5. Véhicule à selle selon l'une quelconque des revendications 1 à 4, dans lequel
le corps principal de béquille (51) comprend en outre une portion d'axe (56) qui s'étend en direction de la largeur du véhicule et supportée par le châssis de pivot (28), et
le mécanisme de liaison (53) comprend une portion de renfoncement (61) renfoncée pour éviter la portion d'axe (56) .

6. Véhicule à selle selon l'une quelconque des revendications 1 à 5, dans lequel le mécanisme de liaison (53) comprend :
une première portion (62) qui s'étend vers l'arrière depuis une position plus à l'intérieur que le châssis de pivot (28) en direction de la largeur du véhicule et plus en avant que le balancier (42) dans un état où le dispositif de béquille centrale (30) est positionné dans la position stockée ; et
une deuxième portion (63) qui s'étend depuis une position plus à l'intérieur que le châssis de pivot (28) en direction de la largeur du véhicule et passant derrière le balancier (42) jusqu'à une position plus à l'extérieur que le châssis de pivot (28) en direction de la largeur du véhicule dans un état où le dispositif de béquille centrale (30) est positionné dans la position stockée.

7. Véhicule à selle selon l'une quelconque des revendications 1 à 5, dans lequel le mécanisme de liaison (53) comprend :
une première portion (62) qui s'étend vers le bas depuis une position plus à l'intérieur que le châssis de pivot (28) en direction de la largeur du véhicule dans un état où le dispositif de béquille centrale (30) est positionné dans la position debout ; et
une deuxième portion (63) qui s'étend depuis une position plus à l'intérieur que le châssis de pivot (28) en direction de la largeur du véhicule et passant sous le châssis de pivot (28) jusqu'à une position plus à l'extérieur que le châssis de pivot (28) en direction de la largeur du véhicule dans un état où le dispositif de béquille centrale (30) est positionné dans la position debout.

8. Véhicule à selle selon l'une quelconque des revendications 1 à 7, dans lequel au moins une portion du mécanisme de liaison (53) chevauche le balancier (42) en vue latérale du véhicule, dans un état où le dispositif de béquille centrale (30) est positionné dans la position stockée.

9. Véhicule à selle selon l'une quelconque des revendications 1 à 8, dans lequel le mécanisme de liaison (53) ne chevauche pas le balancier (42) en vue en plan du véhicule, dans un état où le dispositif de béquille centrale (30) est positionné dans la position stockée.

10. Véhicule à selle selon l'une quelconque des revendications 1 à 9, dans lequel la position de support du mécanisme de liaison (53) par l'élément de support (59) est située plus en avant que le balancier (42), et au moins une portion du mécanisme de liaison (53) est située plus à l'arrière que le balancier (42) dans un état où le dispositif de béquille centrale (30) est positionné dans la position stockée.

11. Véhicule à selle selon l'une quelconque des revendications 1 à 10, dans lequel au moins une portion de l'élément de contrainte (52) chevauche la roue arrière (8) en vue latérale du véhicule, dans un état où le dispositif de béquille centrale (30) est positionné dans la position stockée.

12. Véhicule à selle selon l'une quelconque des revendications 1 à 11, dans lequel
l'unité de frein arrière (34) comprend un frein à tambour et une barre de tension (345) connectée au frein à tambour et s'étendant vers l'avant depuis le frein à tambour, et
dans un état où le dispositif de béquille centrale (30) est positionné dans la position stockée, au moins une portion du mécanisme de liaison (53) est située en dessous de la barre de tension (345) et chevauche la barre de tension (345) en vue en plan du véhicule.

13. Véhicule à selle selon l'une quelconque des revendications 1 à 12, dans lequel au moins une portion du mécanisme de liaison (53) est située plus bas que le balancier (42) dans un état où le dispositif de béquille centrale (30) est positionné dans la position debout.

14. Véhicule à selle selon l'une quelconque des revendications 1 à 13, dans lequel au moins une portion du mécanisme de liaison (53) est située plus en avant qu'une extrémité arrière du balancier (42) dans un état où le dispositif de béquille centrale (30) est positionné dans la position debout.

15. Véhicule à selle selon l'une quelconque des revendications 1 à 14, dans lequel l'unité de frein arrière (34) comprend :
un corps de frein arrière (340) attaché à la roue arrière (8) ; et
un élément de transmission de frein arrière (344) connecté au corps de frein arrière (340) et s'étendant vers l'avant depuis le corps de frein arrière (340), et
le balancier (42) est connecté à l'élément de transmission de frein arrière (344) et à la pédale de frein (35) .
